# FASCICULE DE BREVET EUROPEEN

(11) **EP 4 136 730 B1**
(45) Date de publication et mention de la délivrance du brevet: **05.08.2026**
(21) Numéro de dépôt: 21716158.7
(22) Date de dépôt: 30.03.2021
(51) Int. Cl.: H02J 7/92, B60L 3/00, B60L 7/10, B60L 58/10, B60L 50/60, H02J 7/90

(54) **PROCÉDÉ DE CALIBRATION D'UN COURANT DE CHARGE D'UNE BATTERIE D'UN VÉHICULE AUTOMOBILE ÉLECTRIQUE**
VERFAHREN ZUM KALIBRIEREN EINES LADESTROMS EINER BATTERIE FÜR EIN ELEKTRISCHES KRAFTFAHRZEUG
METHOD FOR CALIBRATING A CHARGE CURRENT OF A BATTERY FOR AN ELECTRIC MOTOR VEHICLE

(30) Priorité: 17.04.2020 FR 2003908
(43) Date de publication de la demande: 22.02.2023
(73) Titulaire: Ampere SAS, 92100 Boulogne-Billancourt (FR)
(72) Inventeur: DERDICHE, Sabri, 94400 Vitry sur Seine (FR); KALAWOUN, Jana, 92800 PUTEAUX (FR); DAGOUSSET, Laure, 78084 Guyancourt Cedex (FR)
(74) Mandataire: Renault Group
(86) Numéro de dépôt international: PCT/EP2021/058299
(87) Numéro de publication internationale: WO 2021/209259

(56) Documents cités:
- JP-A- 2002 058 111
- JP-A- 2019 041 460
- US-A- 5 773 962
- US-A1- 2015 258 897

## Description

### Domaine Technique de l'invention

L'invention concerne un procédé de calibration d'un courant de charge d'une batterie d'un véhicule automobile électrique, la batterie étant chargée avec un courant électrique régénératif issu d'un moteur du véhicule fonctionnant comme un générateur.

### Etat de la technique antérieure

Les batteries des véhicules électriques sont généralement rechargées au moyen d'une source d'énergie électrique externe à laquelle la batterie est connectée. Une batterie peut ainsi être rechargée à une borne de recharge spécifique ou bien être branchée sur le secteur. Pour augmenter l'autonomie des véhicules électriques au cours de leur utilisation, on connaît des procédés de recharge de la batterie utilisant l'énergie du freinage du véhicule. Lorsque le véhicule ralentit, ou encore lorsque le véhicule descend une côte, le moteur électrique du véhicule est utilisé comme un générateur. L'énergie cinétique du véhicule est alors convertie en énergie électrique utile pour la recharge partielle de la batterie.

Ces périodes de recharge en situation de conduite, également dénommée "périodes de régénération", ont généralement une durée de l'ordre de quelques secondes à quelques minutes car elles correspondent aux durées habituelles pour freiner un véhicule ou pour descendre une côte. Afin d'augmenter le plus possible l'autonomie des véhicules électriques, il est connu d'autoriser le rechargement des batteries pendant des périodes courtes de régénération avec un courant électrique important. Le courant électrique est alors nettement supérieur au courant utilisé pour recharger les batteries via une source d'énergie électrique externe, lorsque le véhicule est à l'arrêt. Mais l'utilisation d'un courant important sans endommager la batterie est possible seulement sur de courtes durées. Si la charge de la batterie est poursuivie avec un courant important au-delà d'une durée critique, cela peut provoquer une dégradation irréversible des performances de la batterie. En particulier, s'agissant d'une batterie de type lithium-ion, elle peut être endommagée par un dépôt de lithium métal sur l'anode, phénomène dénommé "lithium plating".

C'est pourquoi, lors d'une longue descente, les forts courants autorisés au début de celle-ci sont rapidement limités afin de préserver la batterie. Par conséquent, une partie de l'énergie cinétique du véhicule n'est pas convertie en énergie électrique utile pour recharger la batterie. De plus, l'effet de frein moteur obtenu par le moteur fonctionnant comme un générateur cesse brusquement. Les utilisateurs du véhicule ressentent donc une perte de freinage et/ou peuvent être surpris par le comportement du véhicule. Le document US2015258897 A1 constitue un exemple de l'état de la technique pertinent.

### Présentation de l'invention

Le but de l'invention est de fournir un procédé de calibration d'un courant de charge d'une batterie d'un véhicule automobile électrique remédiant aux inconvénients ci-dessus et améliorant les procédés de charge connus de l'art antérieur.

Plus précisément, un premier objet de l'invention est un procédé de calibration d'un courant de charge qui préserve l'intégrité de la batterie tout en optimisant la quantité d'énergie fournie à la batterie.

Un second objet de l'invention est un procédé de calibration d'un courant de charge au moyen de l'énergie cinétique d'un véhicule qui permette d'éviter ou de limiter des variations d'accélérations du véhicule.

Un troisième objet de l'invention est un procédé de calibration d'un courant de charge simple à paramétrer et qui requiert un nombre limité d'essais pour sa mise au point.

### Résumé de l'invention

L'invention se rapporte à un procédé de calibration d'un courant de charge régénérative pour recharger une batterie d'un véhicule automobile électrique selon la revendication indépendante 1.

L'énergie récupérée par la batterie lors de la première phase peut être inférieure ou égale à un seuil, ledit seuil étant défini en fonction de la puissance régénérative que peut accepter la batterie et en fonction de la durée de la première phase.

La valeur du courant électrique pour charger la batterie lors de la première phase peut être supérieure ou égale à la valeur du courant électrique pour charger la batterie lors de la deuxième phase.

La valeur du courant électrique lors de la première phase de charge peut être calculée en fonction d'une estimation de la résistance interne de la batterie.

Le procédé de calibration d'un courant de charge régénérative peut comprendre une étape de transition entre la première phase et la deuxième phase au cours de laquelle le courant électrique pour charger la batterie décroit progressivement de la valeur du courant électrique pour charger la batterie pendant la première phase à la valeur du courant électrique pour charger la batterie pendant la deuxième phase.

L'invention se rapporte également à un système de stockage d'énergie pour un véhicule automobile électrique comprenant une batterie et un dispositif de contrôle de batterie aptes à mettre en œuvre le procédé de calibration d'un courant de charge régénérative tel que défini précédemment.

L'invention se rapporte également à un véhicule automobile électrique comprenant un moteur électrique, une batterie reliée au moteur électrique, et des moyens matériels et logiciels aptes à mettre en œuvre le procédé de calibration d'un courant de charge régénérative tel que défini précédemment.

L'invention se rapporte également à un produit programme d'ordinateur comprenant des instructions de code de programme enregistrées sur un support lisible par ordinateur pour mettre en œuvre les étapes du procédé de calibration d'un courant de charge régénérative tel que défini précédemment lorsque ledit programme fonctionne sur un ordinateur. L'invention se rapporte aussi à un produit programme d'ordinateur téléchargeable depuis un réseau de communication et/ou enregistré sur un support de données lisible par un ordinateur et/ou exécutable par un ordinateur comprenant des instructions qui, lorsque le programme est exécuté par l'ordinateur, conduisent celui-ci à mettre en œuvre le procédé de calibration d'un courant de charge régénérative tel que défini précédemment.

L'invention se rapporte également à un support d'enregistrement de données, lisible par un ordinateur, sur lequel est enregistré un programme d'ordinateur comprenant des instructions de code de programme de mise en œuvre du procédé de calibration d'un courant de charge régénérative tel que défini précédemment. L'invention se rapporte aussi à un support d'enregistrement lisible par ordinateur comprenant des instructions qui, lorsqu'elles sont exécutées par un ordinateur, conduisent celui-ci à mettre en œuvre le procédé de calibration d'un courant de charge régénérative tel que défini précédemment.

L'invention se rapporte également à un signal d'un support de données, portant le produit programme d'ordinateur tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une vue schématique d'un véhicule automobile selon un mode de réalisation de l'invention.
[Fig. 2] La figure 2 est un premier graphique représentant l'évolution, issue de tests, d'un courant de charge d'une batterie en fonction de son état de charge effectif et en fonction de son état de charge initial.
[Fig. 3] La figure 3 est un deuxième graphique représentant l'évolution, extrapolée à un état de charge élevé, d'un courant de charge d'une batterie en fonction de son état de charge effectif et en fonction de son état de charge initial.

### Description détaillée

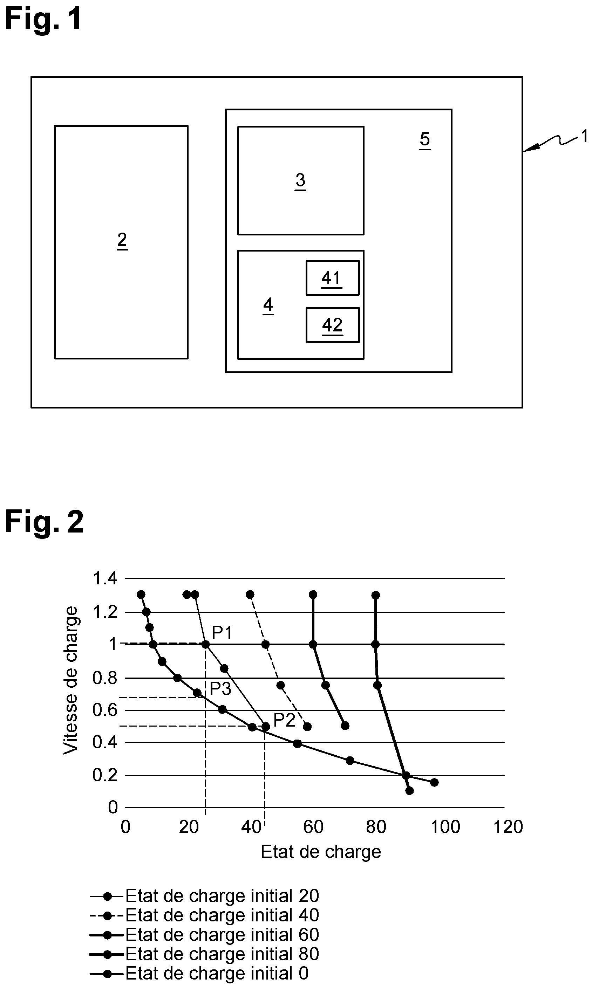

La figure 1 illustre schématiquement un véhicule 1 automobile électrique selon un mode de réalisation de l'invention. Le véhicule 1 est équipé d'un moteur électrique 2, d'une batterie 3 et d'un dispositif de contrôle de batterie 4. Le véhicule 1 peut être par exemple un véhicule particulier, un véhicule utilitaire, un camion ou un bus. La batterie 3 est un réservoir d'énergie pour le moteur électrique 2. Le moteur électrique 2 peut être utilisé pour entraîner les roues en rotation et faire avancer le véhicule. Dans ce cas, la batterie 3 produit un courant électrique qui permet d'entraîner en rotation un rotor du moteur. Dans ce mode de fonctionnement la batterie se décharge donc progressivement. Inversement, le moteur électrique 2 peut être utilisé comme générateur de courant électrique. Dans ce cas, c'est la rotation des roues du véhicule qui entraîne le rotor du moteur en rotation. Le moteur électrique génère ainsi un courant électrique qui peut être utilisé pour recharger, au moins partiellement, la batterie 3. Dans ce cas, le moteur électrique 2 produit un couple résistif qui tend à ralentir le véhicule. Un tel mode de fonctionnement peut être qualifié de "freinage récupératif" ou de "freinage régénératif". Si le couple résistif produit par le moteur électrique fonctionnant comme un générateur n'est pas suffisant pour ralentir le véhicule avec la décélération souhaitée par l'utilisateur, des freins conventionnels peuvent être utilisés pour augmenter le couple résistif produit sur les roues du véhicule.

Selon un mode de réalisation préféré, la batterie est du type lithium-ion. Une batterie de type lithium-ion comprend un accumulateur électrochimique qui utilise du lithium sous une forme ionique. La batterie produit un courant électrique grâce à un échange réversible des ions lithium entre deux électrodes : une anode, généralement en graphite, et une cathode, généralement en oxyde métallique. La durabilité de la batterie est particulièrement affectée par la puissance de charge autorisée pour une température et un état de charge (également dénommé SOC, acronyme de "State of Charge") donnés. Une cartographie de charge est définie par des tests de caractérisations spécifiques (couramment dénommés "mesure trois électrodes") et validée à partir de tests de cyclage pour s'assurer que le protocole de charge défini n'affecte pas la durabilité de la batterie. La batterie 3 comprend un ensemble de cellules élémentaires montées en série et/ou en parallèle.

Le dispositif de contrôle de batterie 4 peut comprendre un calculateur ou une unité de commande électronique. Il comprend notamment un microcontrôleur 41 et une mémoire 42. Il est apte à réguler un courant électrique entrant ou sortant de la batterie. La mémoire 42 est un support d'enregistrement de données sur lequel est enregistré un programme d'ordinateur comprenant des instructions de code de programme de mise en œuvre d'un procédé de charge de la batterie selon un mode de réalisation de l'invention. La batterie 3 et le dispositif de contrôle de batterie 4 forment ensemble un système de stockage d'énergie 5 du véhicule 1.

On décrit à présent un procédé de charge de la batterie 3 selon un mode de réalisation de l'invention. Le procédé de charge est mis en œuvre lorsque le moteur fonctionne comme un générateur de courant. Une telle situation peut notamment survenir lorsque l'utilisateur du véhicule relâche l'accélérateur ou lorsqu'il appuie sur la pédale de frein. En particulier, le procédé de charge pourra avantageusement être mis en œuvre lors d'une longue descente, par exemple lors de la descente d'un col de montage ou d'une colline. Dans de telles situations, l'énergie cinétique du véhicule 1 peut être utilisée pour la production d'un courant électrique pour recharger la batterie.

Le procédé de charge régénérative comprend deux phases successives : une première phase durant laquelle la batterie accepte des puissances régénératives importantes suivie d'une deuxième phase de puissance régénérative réduite appelée « modulation ». Une étape de transition peut être prévue entre la première phase et la deuxième phase. Le procédé de charge peut être répété à chaque fois que le moteur peut fonctionner comme un générateur, c'est-à-dire à chaque descente effectuée par le véhicule et/ou à chaque fois que le véhicule est freiné. Le procédé de charge peut débuter dès que le moteur fonctionne comme un générateur de courant électrique. Le procédé de charge peut succéder à une phase de décharge de la batterie ou à une phase d'attente dans laquelle la batterie n'est ni déchargée, ni rechargée.

La première phase de charge est limitée à une durée maximale prédéterminée dépendant de l'état de charge et de la température de la batterie. Par exemple, la durée maximale de la première phase peut être fixée à une minute, ou encore par exemple à trente secondes, ou encore par exemple à dix secondes. Si l'utilisateur accélère de nouveau pendant la première phase, la charge de la batterie est interrompue et le sens du courant électrique entre la batterie et le moteur électrique s'inverse. Dans ce cas de figure, le procédé de charge n'est composé que de la première phase. En revanche, si le moteur continue à fonctionner comme un générateur au-delà de la durée maximale, alors la deuxième phase de chargement de la batterie est exécutée. Une telle situation peut survenir notamment lors de longues descentes.

En fonction des caractéristiques techniques de la batterie et de ses conditions d'utilisation, on peut définir un courant maximal que peut supporter la batterie sans être endommagée. Si la batterie est chargée avec un courant électrique plus important pendant la même durée, ou encore si la batterie est chargée avec le même courant électrique mais pendant une durée plus importante, elle risque d'être endommagée. Notamment, elle risque de subir une dégradation par dépôt électrolytique de lithium sur l'anode, phénomène dénommé "lithium plating". Pour un état de charge et une température donnés, la combinaison d'une valeur de courant électrique et d'une durée correspondante maximale peut être définie par des tests de caractérisation de la batterie.

Notamment, une puissance régénérative autorisée pendant la première phase peut être basée sur une estimation d'une résistance interne de la batterie (également dénommé DCR, acronyme de "Direct Current Resistance") de x secondes calculée à partir des tests de caractérisations tension/intensité (également dénommés tests IV), "x" désignant ici la durée de la première phase. En effet, une DCR x secondes est calculée par l'évolution de la tension après x secondes à un courant donné. A partir de cette DCR, un courant maximum est calculé pour s'assurer que la tension d'une cellule de la batterie ne dépasse pas une tension maximale d'utilisation. Ensuite, une puissance régénérative est calculée en se basant sur ce courant maximum et cette DCR. Cette méthode de charge est basée sur une régulation en tension d'une puissance autorisée. Lors des phases de freinage récupératif, la puissance autorisée est progressivement réduite jusqu'à l'atteinte d'une tension maximale. La résistance interne d'une batterie peut notamment dépendre d'une durée de charge, d'un état de charge de la batterie , d'une température ambiante, d'un état d'usure de la batterie (également dénommé SOH, acronyme de "State of Health")

La deuxième phase de charge débute après l'expiration de ladite durée maximale et elle est poursuivie indéfiniment, tant que le moteur du véhicule fonctionne comme un générateur. La valeur du courant électrique pour charger la batterie pendant la deuxième phase est définie en fonction d'une estimation de l'état de charge effectif de la batterie, en fonction de la température de la batterie, et en fonction d'une estimation d'un gain de charge maximal lors de la première phase. La polarisation maximale de la batterie à la fin de la première phase dépend du gain de charge lors de la première phase. Autrement dit, la deuxième phase repose sur une cartographie de puissance de charge autorisée en fonction de l'état de charge de la batterie, de la température de la batterie, et en fonction d'un état de charge initial de la batterie au début du procédé de charge.

La figure 2 représente le courant électrique maximum utilisable pour charger la batterie sur une longue période de temps, pour une température donnée (en l'espèce 10°C). Selon une convention couramment adoptée, le courant électrique est exprimé en fonction d'une vitesse de charge C-rate. Par exemple, le courant électrique correspondant une vitesse de charge C-rate de valeur 1 est un courant électrique permettant de charger complètement la batterie en une heure de temps. Le courant électrique dépend non seulement de l'état de charge effectif (SOC) de la batterie mais également de l'état de charge initial (Start SOC) de la batterie, au début du procédé de charge de la batterie, c'est-à-dire au début de la première phase précédemment décrite. La figure 2 comprend cinq courbes illustrant la vitesse de charge C-rate en fonction de l'état de charge SOC, respectivement pour cinq valeurs d'état de charge initial : 0%, 20%, 40%, 60% et 80%.

Par exemple, en référence au point identifié par P1 sur la figure 2, une batterie chargée à 20% au début du procédé de charge (c'est-à-dire au début de la première phase) pourrait être chargée avec un courant électrique correspondant à une vitesse de charge "C-rate" de 1 lorsque son état de charge atteint environ 25%. A mesure que l'état de charge de la batterie augmente, le courant électrique admissible par la batterie décroit. Par exemple, en référence au point identifié par P2 sur la figure 2, une batterie chargée à 20% au début du procédé de charge peut être chargée avec un courant électrique correspondant à une vitesse de charge "C-rate" de 0.5 lorsque son état de charge atteint environ 45%.

On remarque sur le graphique de la figure 2 que, pour arriver à un état de charge donné, le courant de charge maximum admissible pour charger la batterie est plus faible lorsque l'état de charge initial de la batterie est plus bas. Par exemple, si on compare les points P1 et P3, on constate qu'une batterie dont l'état de charge est 25% peut être chargée avec une vitesse de charge C-rate égale à 1 lorsque son état de chargée initial (début de la phase régénérative) était de 20%, alors qu'elle ne peut être chargée qu'avec une vitesse de charge C-rate égale environ à 0.7 lorsque son état de chargée initial était de 0%. Ce phénomène s'explique par la polarisation de la batterie au cours de son procédé de charge.

Si on prend pour hypothèse que la batterie était complètement déchargée au commencement du procédé de charge régénérative (i.e., polarisation maximale), on applique un courant électrique de charge relativement faible correspondant à la courbe "Start Soc = 0". Cette hypothèse permet donc de s'assurer qu'on n'endommage pas la batterie mais conduit à ne recharger que faiblement la batterie lors de la deuxième phase, dite de modulation.

Au contraire, si on prend pour hypothèse que l'état de charge de la batterie au commencement de la première phase est identique à l'état de charge de la batterie au commencement de la deuxième phase (i.e., polarisation nulle), on risque de charger la batterie avec un courant trop important, ce qui risque de l'endommager.

Avantageusement, l'invention prévoit un compromis entre ces deux hypothèses en s'appuyant sur une estimation de l'état de charge de la batterie au début du procédé de charge régénérative. Une telle estimation permet d'ajuster plus précisément le courant régénératif et ainsi tirer le meilleur profit possible de l'énergie cinétique du véhicule.

Le calcul du courant régénératif lors de la deuxième phase, dite de modulation dépend d'une estimation d'un gain de charge maximal lors de la première phase. Pour réduire le calcul embarqué, l'estimation du gain de charge maximal lors de la première phase est fixée à une valeur proportionnelle à la capacité totale de la batterie. Dans le cas de notre étude, l'estimation de ce gain de charge maximal est égale à 15% de la capacité totale de la batterie. Cette valeur doit couvrir tous les cas d'utilisation possible rencontré par un automobiliste. Autrement dit, il a été déterminé que la charge de la batterie lors de la première phase ne peut pas excéder cette valeur. Bien sûr, cette valeur est dépendante de la capacité totale de la batterie et de la capacité du moteur à générer du courant à la batterie.

En considérant une valeur maximale fixe pour le gain d'état de charge lors de la première phase, on évite de devoir estimer l'état de charge de la batterie au début du procédé de charge régénérative et on limite le calcul embarqué.

En conséquence de ce qui précède, la valeur du courant électrique pour charger la batterie lors de la phase de modulation est supérieure ou égale à la valeur d'un courant électrique préconisé pour charger une batterie identique sans l'endommager si cette batterie est rechargée depuis un état de charge nul. La valeur du courant électrique préconisée pour charger une batterie identique sans l'endommager si cette batterie est rechargée depuis un état de charge nul est donné par la courbe "Start Soc = 0" sur la figure 2. Ainsi, on augmente la quantité d'énergie récupérée pour charger la batterie comparativement à une charge prenant pour hypothèse un état de charge initial nul. De plus, la variation de couple résistif du moteur est plus faible et l'utilisateur ressent donc une plus faible variation d'accélération lors de la transition entre la première phase et la deuxième phase.

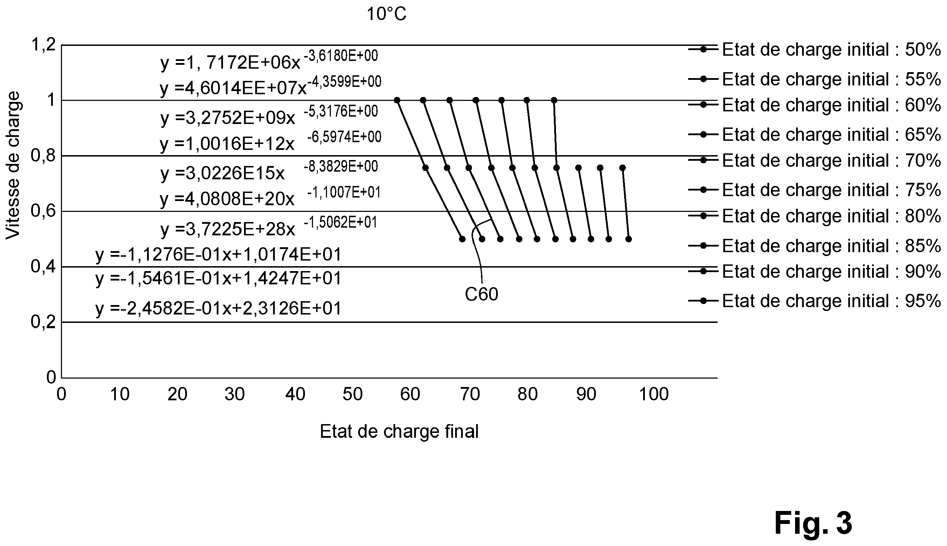

La figure 3 représente le courant de charge C-rate en fonction de l'état de charge effectif et en fonction de l'état de charge initial au début de la deuxième phase, dite de modulation, en tenant compte de la polarisation liée à la première phase, soit un gain de charge maximal de 15%. Les courbes représentées sur ce graphique tiennent donc déjà compte d'une l'hypothèse de gain de charge obtenue lors de la première phase. Par exemple pour un état de charge de 60% au début de la deuxième phase, dite de modulation, si on applique un courant de 0.8C on pourra charger jusqu'à 65% et si on applique un courant de 0.5C on pourra charger jusqu'à 70% (courbe identifiée par C60 sur la figure 3). Les courbes figurant dans ce graphique peuvent être définies pour différentes températures de fonctionnement lors de la calibration du véhicule. On peut vérifier par des essais de cyclage sur des batteries que les conditions de charge proposées ne dégradent pas les batteries.

Dans cet exemple des courbes ont été définies par palier de 5% d'état de charge initial, de 50% à 95%. Lorsque l'état de charge initial ne correspond pas exactement à l'une des courbes pour lesquelles des essais ont été réalisés, on peut appliquer un courant de charge correspondant à une courbe définie pour un état de charge initial directement inférieur, de sorte à préserver l'intégrité de la batterie. Avantageusement, la phase de calibration du véhicule comprend un maximum de cas d'usage possible de sorte à pouvoir définir le courant de charge aussi finement que possible.

Avantageusement, on peut prévoir une étape de transition de la puissance entre les deux phases. Au cours de cette étape de transition la puissance régénérative pour charger la batterie décroit progressivement. Par exemple, la puissance régénérative peut décroitre linéairement en fonction du temps entre ces deux phases. Ainsi, on évite une variation trop brutale de la puissance régénérative et donc une variation trop brutale du couple résistif produit par le moteur électrique. Le confort des utilisateurs du véhicule est donc encore amélioré.

En variante, l'invention pourrait être appliquée à l'utilisation de batterie de composition chimique différente d'une batterie lithium-ion. Le procédé de charge de la batterie selon l'invention pourrait être transposé au chargement de toute autre batterie embarquée dans le véhicule. Le procédé de charge selon l'invention pourrait également être mis en œuvre pour réguler le courant électrique délivré par une source de courant externe pour charger la batterie, par exemple le courant électrique délivré par une borne de recharge, cet exemple ne fais pas partie de l'invention.

## Revendications

1. Procédé de calibration d'un courant de charge régénérative pour recharger une batterie (3) d'un véhicule (1) automobile électrique, le courant de charge régénérative étant issu d'un moteur électrique (2) du véhicule fonctionnant comme un générateur, le procédé de calibration comprenant :
- une étape de définition d'une première phase de charge et d'une deuxième phase de charge consécutive à la première phase de charge, la première phase ayant une durée prédéterminée, la deuxième phase de charge ayant une durée indéterminée et étant poursuivie tant que le moteur du véhicule fonctionne comme un générateur et que la tension maximale de la batterie n'est pas atteinte,
- une étape de définition de la valeur du courant électrique pour charger la batterie pendant la deuxième phase en fonction de l'état de charge (SOC) de la batterie, en fonction de la température de la batterie, et en fonction d'une estimation d'un gain de charge maximal lors de la première phase, **caractérisé en ce que** l'estimation du gain de charge maximal lors de la première phase est déterminé en fonction de la durée de la première phase, en fonction d'une puissance régénérative lors de la première phase, et en fonction d'une capacité régénérative du moteur, notamment l'estimation du gain de charge maximal lors de la première phase étant égale à 15% de la capacité totale de la batterie.

2. Procédé de calibration d'un courant de charge régénérative selon la revendication 1, **caractérisé en ce que** l'énergie récupérée par la batterie lors de la première phase est inférieure ou égale à un seuil, ledit seuil étant défini en fonction de la puissance régénérative que peut accepter la batterie et en fonction de la durée de la première phase.

3. Procédé de calibration d'un courant de charge régénérative selon l'une des revendications précédentes, **caractérisé en ce que** la valeur du courant électrique pour charger la batterie lors de la première phase est supérieure ou égale à la valeur du courant électrique pour charger la batterie lors de la deuxième phase.

4. Procédé de calibration d'un courant de charge régénérative selon l'une des revendications précédentes, **caractérisé en ce que** la valeur du courant électrique lors de la première phase de charge est calculée en fonction d'une estimation de la résistance interne de la batterie.

5. Procédé de calibration d'un courant de charge régénérative selon l'une des revendications précédentes, **caractérisé en ce qu'**il comprend une étape de transition entre la première phase et la deuxième phase au cours de laquelle le courant électrique pour charger la batterie décroit progressivement de la valeur du courant électrique pour charger la batterie pendant la première phase à la valeur du courant électrique pour charger la batterie pendant la deuxième phase.

6. Système de stockage d'énergie (5) pour un véhicule (1) automobile électrique, **caractérisé en ce qu'**il comprend une batterie (3) et un dispositif de contrôle de batterie (4) aptes à mettre en œuvre le procédé de calibration d'un courant de charge régénérative selon l'une des revendications précédentes.

7. Véhicule (1) automobile électrique, **caractérisé en ce qu'**il comprend un moteur électrique (2), le système de stockage d'énergie (5) selon la revendication 6, la batterie (3) étant reliée audit moteur électrique (2).

8. Produit programme d'ordinateur comprenant des instructions de code de programme enregistrées sur un support lisible par ordinateur pour mettre en œuvre les étapes du procédé de calibration d'un courant de charge régénérative selon l'une quelconque des revendications 1 à 5 lorsque ledit programme est exécuté sur un ordinateur pour contrôler le système de stockage d'énergie conformément à la revendication 6.

9. Support d'enregistrement de données, lisible par un ordinateur, sur lequel est enregistré un programme d'ordinateur comprenant des instructions de code de programme de mise en œuvre du procédé de calibration d'un courant de charge régénérative selon l'une des revendications 1 à 5 pour contrôler le système de stockage d'énergie conformément à la revendication 6.

## Patentansprüche

1. Verfahren zum Kalibrieren eines Stroms zum regenerativen Laden zum Wiederaufladen einer Batterie (3) eines Elektrokraftfahrzeugs (1), wobei der Strom zum regenerativen Laden aus einem als Generator arbeitenden Elektromotor (2) des Fahrzeugs stammt, das Verfahren zum Kalibrieren umfassend:
- einen Schritt des Festlegens einer ersten Ladephase und einer zweiten Ladephase, die auf die erste Ladephase folgt, wobei die erste Phase eine vorbestimmte Dauer hat, wobei die zweite Ladephase eine unbestimmte Dauer hat und fortgesetzt wird, solange der Motor des Fahrzeugs als Generator arbeitet und die maximale Spannung der Batterie nicht erreicht ist,
- einen Schritt des Festlegens des Werts des elektrischen Stroms zum Laden der Batterie während der zweiten Phase in Abhängigkeit von dem Ladezustand (SOC) der Batterie, in Abhängigkeit von der Temperatur der Batterie und in Abhängigkeit von einer Schätzung einer maximalen Ladungszunahme in der ersten Phase, **dadurch gekennzeichnet, dass** die Schätzung der maximalen Ladungszunahme in der ersten Phase in Abhängigkeit von der Dauer der ersten Phase, in Abhängigkeit von einer regenerativen Leistung in der ersten Phase und in Abhängigkeit von der regenerativen Kapazität des Motors bestimmt wird, wobei die Schätzung der maximalen Ladezunahme in der ersten Phase insbesondere 15 % der Gesamtkapazität der Batterie beträgt.

2. Verfahren zum Kalibrieren eines Stroms zum regenerativen Laden nach Anspruch 1, **dadurch gekennzeichnet, dass** die von der Batterie in der ersten Phase zurückgewonnene Energie kleiner oder gleich einem Schwellenwert ist, wobei der Schwellenwert in Abhängigkeit von der regenerativen Leistung, welche die Batterie annehmen kann, und in Abhängigkeit von der Dauer der ersten Phase festgelegt wird.

3. Verfahren zum Kalibrieren eines Stroms zum regenerativen Laden nach einem der vorhergehenden Ansprüche, **dadurch gekennzeichnet, dass** der Wert des elektrischen Stroms zum Laden der Batterie in der ersten Phase größer oder gleich dem Wert des elektrischen Stroms zum Laden der Batterie in der zweiten Phase ist.

4. Verfahren zum Kalibrieren eines Stroms zum regenerativen Laden nach einem der vorhergehenden Ansprüche, **dadurch gekennzeichnet, dass** der Wert des elektrischen Stroms in der ersten Ladephase in Abhängigkeit von einer Schätzung des internen Widerstands der Batterie berechnet wird.

5. Verfahren zum Kalibrieren eines Stroms zum regenerativen Laden nach einem der vorhergehenden Ansprüche, **dadurch gekennzeichnet, dass** es einen Schritt des Übergangs zwischen der ersten Phase und der zweiten Phase umfasst, während dessen der elektrische Strom zum Laden der Batterie allmählich von dem Wert des elektrischen Stroms zum Laden der Batterie während der ersten Phase auf den Wert des elektrischen Stroms zum Laden der Batterie während der zweiten Phase sinkt.

6. Energiespeichersystem (5) für ein Elektrokraftfahrzeug (1), **dadurch gekennzeichnet, dass** es eine Batterie (3) und eine Batteriesteuervorrichtung (4) umfasst, die geeignet sind, das Verfahren zum Kalibrieren eines Stroms zum regenerativen Laden nach einem der vorhergehenden Ansprüche durchzuführen.

7. Elektrokraftfahrzeug (1), **dadurch gekennzeichnet, dass** es einen Elektromotor (2), das Energiespeichersystem (5) nach Anspruch 6 umfasst, wobei die Batterie (3) mit dem Elektromotor (2) verbunden ist.

8. Computerprogrammprodukt, das Programmcodeanweisungen umfasst, die auf einem computerlesbaren Medium gespeichert sind, um die Schritte des Verfahrens zum Kalibrieren eines Stroms zum regenerativen Laden nach einem der Ansprüche 1 bis 5 durchzuführen, wenn das Programm auf einem Computer ausgeführt wird, um das Energiespeichersystem nach Anspruch 6 zu steuern.

9. Computerlesbares Datenspeichermedium, auf dem ein Computerprogramm gespeichert ist, das Programmcodeanweisungen zur Durchführung des Verfahrens zum Kalibrieren eines Stroms zum regenerativen Laden nach einem der Ansprüche 1 bis 5 umfasst, um das Energiespeichersystem nach Anspruch 6 zu steuern.

## Claims

1. Method of calibrating a regenerative charging current for recharging a battery (3) of an electric motor vehicle (1), the regenerative charging current being derived from an electric motor (2) of the vehicle operating as a generator, the calibration method comprising:
- a step of defining a first charging phase and a second charging phase subsequent to the first charging phase, the first phase having a predetermined duration, the second charging phase having an undetermined duration and being continued for as long as the motor of the vehicle operates as a generator and the maximum voltage of the battery is not reached,
- a step of defining the value of the electric current for charging the battery during the second phase in dependence on the state of charge (SOC) of the battery, in dependence on the temperature of the battery, and in dependence on an estimate of a maximum charge gain during the first phase, **characterized in that** the estimate of the maximum charge gain during the first phase is determined in dependence on the duration of the first phase, in dependence on a regenerative power during the first phase, and in dependence on a regenerative capacity of the motor, in particular the estimate of the maximum charge gain during the first phase being equal to 15% of the total capacity of the battery.

2. Method of calibrating a regenerative charging current according to Claim 1, **characterized in that** the energy recovered by the battery during the first phase is less than or equal to a threshold, said threshold being defined in dependence on the regenerative power that the battery can accept and in dependence on the duration of the first phase.

3. Method of calibrating a regenerative charging current according to either of the preceding claims, **characterized in that** the value of the electric current for charging the battery during the first phase is greater than or equal to the value of the electric current for charging the battery during the second phase.

4. Method of calibrating a regenerative charging current according to one of the preceding claims, **characterized in that** the value of the electric current during the first charging phase is calculated in dependence on an estimate of the internal resistance of the battery.

5. Method of calibrating a regenerative charging current according to one of the preceding claims, **characterized in that** it comprises a transition step, between the first phase and the second phase, during which the electric current for charging the battery gradually decreases from the value of the electric current for charging the battery during the first phase to the value of the electric current for charging the battery during the second phase.

6. Energy storage system (5) for an electric motor vehicle (1), **characterized in that** it comprises a battery (3) and a battery control device (4) which are capable of implementing the method of calibrating a regenerative charging current according to one of the preceding claims.

7. Electric motor vehicle (1), **characterized in that** it comprises an electric motor (2), the energy storage system (5) according to Claim 6, the battery (3) being connected to said electric motor (2).

8. Computer program product comprising program code instructions which are stored on a computer-readable medium for implementing the steps of the method of calibrating a regenerative charging current according to any one of Claims 1 to 5 when said program is executed by a computer for controlling the energy storage system in accordance with Claim 6.

9. Computer-readable data recording medium on which is stored a computer program comprising program code instructions for implementing the method of calibrating a regenerative charging current according to one of Claims 1 to 5 for controlling the energy storage system in accordance with Claim 6.
